# EUROPEAN PATENT SPECIFICATION

(11) **EP 4 068 838 B1**
(45) Date of publication and mention of the grant of the patent: **28.01.2026**
(21) Application number: 19957297.5
(22) Date of filing: 23.12.2019
(51) Int. Cl.: H04W 28/02, H04W 24/02, H04W 88/12, H04W 88/08

(54) **COMMUNICATION METHOD AND COMMUNICATION APPARATUS**
KOMMUNIKATIONSVERFAHREN UND KOMMUNIKATIONSVORRICHTUNG
PROCÉDÉ ET APPAREIL DE COMMUNICATION

(43) Date of publication of application: 05.10.2022
(73) Proprietor: Huawei Technologies Co., Ltd., Longgang Shenzhen, Guangdong 518129 (CN)
(72) Inventor: HU, Xingxing, Shenzhen, Guangdong 518129 (CN); ZENG, Qinghai, Shenzhen, Guangdong 518129 (CN); ZHANG, Hongping, Shenzhen, Guangdong 518129 (CN)
(74) Representative: Pfenning, Meinig & Partner mbB
(86) International application number: PCT/CN2019/127577
(87) International publication number: WO 2021/127896

(56) References cited:
- EP-A1- 3 761 681
- WO-A1-2019/139345
- WO-A1-2019/166031
- WO-A1-2019/193553
- CN-A- 109 151 871
- CN-A- 110 035 431
- ZTE: "TP for TS38.460 on UP information transfer over E1", vol. RAN WG3, no. Busan, Korea; 20180521 - 20180525, 20 May 2018 (2018-05-20), XP051445377, Retrieved from the Internet <URL:http://www.3gpp.org/ftp/Meetings%5F3GPP%5FSYNC/RAN3/Docs/> [retrieved on 20180520]
- ERICSSON, AT&T, INTEL, VODAFONE: "Resolution of E1 open issues – interface design", 3GPP DRAFT; R3-173334 E1 OPEN ISSUES RESOLUTION - INTERFACE DESIGN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Berlin, Germany; 20170821 - 20170825, 22 August 2017 (2017-08-22), Mobile Competence Centre ; 650, route des Lucioles ; F-06921 Sophia-Antipolis Cedex ; France, XP051320148

## Description

### TECHNICAL FIELD

This application relates to the communication field, and more specifically, to a communication method and a communication apparatus.

### BACKGROUND

A centralized unit (centralized unit, CU)/distributed unit (distributed unit, DU) architecture is introduced into a 5th generation (5th generation, 5G) communication technology. To be specific, an access network device (for example, a base station) is divided into two parts: a CU and a DU. The CU may be further divided into a centralized unit control plane (centralized unit control plane, CU-CP) and a centralized unit user plane (centralized unit user plane, CU-UP). The CU-CP may be responsible for a control plane function. The CU-UP may be responsible for a user plane function.

In a new network architecture, how the access network device schedules or configures a service is a problem that needs to be resolved.

WO 2019/193553 describes a method provided by a central-unit-control plane (CU-CP) of a network node for exchanging information with a central-unit user plane (CU-UP) of the network node to manage Quality of Service (QoS) flows for the optimization of radio resources.

WO 2019/166031 describes a multi-connectivity data reporting method, including: obtaining, by a first network device, a first data volume report, where the first data volume report is used to indicate a volume of data that is of a terminal device and that passes through a second network device, and the first data volume report includes QoS flow identifiers QFIs of one or more quality of service QoS flows, identifiers of one or more protocol data unit PDU sessions to which the one or more QoS flows belong, and data volumes of the one or more QoS flows; and sending, by the first network device, the first data volume report to a third network device.

### SUMMARY

This application provides a communication method and a communication apparatus, so that a DU can schedule or configure a service based on a service feature sent by a CU-CP. The scope of protection of the present invention is set out by the appended claims.

According to a first aspect, a communication method is provided, and includes: A second network node receives a first service feature that is of a service and that is sent by a first network node and that is obtained by the first service node based on actual service data, where the first network node is a CU-CP, the second network node is a CU-CP, and the first service feature includes one or more of the following: whether the service is a periodic service, a periodicity corresponding to the service when the service is a periodic service, a service packet size corresponding to the service, a service model corresponding to the service, or scheduling time of the service. A service model is one of: only a single uplink, only a single downlink, a single uplink followed by a single downlink, a single uplink followed by a plurality of downlinks, or a plurality of uplinks followed by a single downlink, where the terms "single" and "plurality" refer to a quantity of data packets. The method further includes: The second network node sends the first service feature to a third network node, where the third network node is a DU. Alternatively the method further includes: The second network node determines a second service feature of the service based on the first service feature, where a granularity corresponding to the first service feature is different from a granularity corresponding to the second service feature, and the second network node sends the second service feature to the third network node.

According to the communication method provided in this application, the first network node may obtain the service feature, and may provide the service feature for the second network node. Then, the second network node may provide the service feature for a DU, so that the DU can schedule or configure the service based on the received service feature.

In addition, a service feature is usually provided by a core network for an access network device, but the service feature provided by the core network is usually a subscribed service feature that may be inconsistent with an actual service feature. Consequently, the access network device may fail to adapt to the service feature when scheduling or configuring a service. However, according to the communication method provided in this application, the first network node may obtain the service feature based on actual service data. In this way, the obtained service feature more conforms to an actually transmitted service, so that the DU can better adapt to the service during scheduling or configuration.

Optionally, a granularity corresponding to the first service feature is any one of the following: a protocol data unit (protocol data unit, PDU) session, a terminal device, a quality of service (quality of service, QoS) flow, a data radio bearer (data radio bearer, DRB), or a slice (slice). Alternatively, the first service feature is a service feature corresponding to a specific PDU session, terminal device, QoS flow, DRB, or slice, where the specific PDU session, terminal device, QoS flow, DRB, or slice corresponds to the service.

With reference to the first aspect, in some implementations of the first aspect, the method may further include: The first network node receives algorithm information sent by a core network device, where the algorithm information includes a first algorithm and/or parameter information corresponding to the first algorithm. That a first network node obtains a first service feature of a service includes: The first network node determines the first service feature based on the algorithm information.

Based on this solution, the first network node may predict the first service feature based on the algorithm information.

Optionally, the algorithm information may be sent by the core network device or another network element (for example, a network management platform) to the first network node.

Optionally, the first algorithm may be some specific algorithms (for example, a decision tree, naive Bayes classification, the least square method, or a support vector machine) in a supervised learning algorithm, some specific algorithms (for example, a cluster algorithm) in an unsupervised learning algorithm, or some specific algorithms in reinforcement learning.

Optionally, that the first network node receives algorithm information sent by a core network device includes: The first network node receives, by using the centralized unit control plane, the algorithm information sent by the core network device.

With reference to the first aspect, in some implementations of the first aspect, the method may further include: The first network node sends, to the core network device, a second algorithm and/or parameter information corresponding to the second algorithm.

Based on this solution, after the first network node is handed over, or when the terminal device enters a radio resource control (radio resource control, RRC) idle (RRC_idle) state and then enters an RRC connected (RRC_connected) state from the RRC_idle state, the core network device may send, to a CU-UP that re-establishes a connection the terminal device, the second algorithm and/or the parameter information corresponding to the second algorithm, and the CU-UP may continue to predict a service feature based on the second algorithm and/or the parameter information corresponding to the second algorithm.

Optionally, first algorithm information and second algorithm information may be the same, or may be different.

With reference to the first aspect, in some implementations of the first aspect, that a first network node obtains a first service feature of a service includes: The first network node determines the first service feature based on assistance information sent by the core network device or another network node, where the assistance information includes one or more of the following: whether the service is a periodic service, a periodicity corresponding to the service when the service is a periodic service, a service packet size corresponding to the service, a service model corresponding to the service, or scheduling time of the service, and the assistance information is the same as or different from the service feature.

Optionally, the assistance information may be determined and sent to the core network device by a CU-UP accessed by the terminal device last time.

With reference to the first aspect, in some implementations of the first aspect, that a first network node obtains a first service feature of a service includes: The first network node obtains the first service feature locally or from another CU-UP.

According to the method provided in this application, the CU-UP obtains the service feature, and the CU-CP sends the service feature or another service feature determined based on the service feature to the DU, so that the DU can schedule or configure the service based on the received service feature.

With reference to the first aspect, in some implementations of the first aspect, the method may further include: The second network node sends the first service feature or the second service feature to a core network device.

In this way, when the terminal device returns from an RRC_idle state or an inactive (inactive) state to an RRC_connected state next time, the core network device may send the first service feature or the second service feature to the CU-UP, and the CU-UP may continue to predict or use a service feature based on the first service feature or the second service feature.

According to a second aspect, a communication apparatus is provided, and includes modules or units configured to perform the method according to the first aspect.

In an implementation, the apparatus corresponds to the second network node in the first aspect. The apparatus includes a transceiver unit, configured to receive a first service feature that is of a service and that is sent by a first network node, where the first network node is a centralized unit user plane, and the first service feature includes one or more of the following: whether the service is a periodic service, a periodicity corresponding to the service when the service is a periodic service, a service packet size corresponding to the service, a service model corresponding to the service, or scheduling time of the service.

According to a third aspect, a computer program product is provided. The computer program product includes a computer program (also referred to as code or instructions). When the computer program is run, a computer is enabled to perform the method according to the first aspect

According to a fourth aspect, a computer-readable medium is provided. The computer-readable medium stores a computer program (also referred to as code or instructions). When the computer program is run on a computer, the computer is enabled to perform the method according to the first aspect.

### BRIEF DESCRIPTION OF DRAWINGS

FIG. 1 is a schematic diagram of a communication system used in this application;
FIG. 2 is a schematic flowchart of a communication method according to this application;
FIG. 3 is a schematic flowchart of another communication method according to this application, which is not part of the claimed invention;
FIG. 4 is a schematic flowchart of a communication method according to this application, which is not part of the claimed invention;
FIG. 5 is a schematic flowchart of another communication method according to this application, which is not part of the claimed invention;
FIG. 6 is a schematic flowchart of a communication method according to this application, which is not part of the claimed invention;
FIG. 7 is a schematic block diagram of a communication apparatus according to this application; and
FIG. 8 is a schematic block diagram of another communication apparatus according to this application.

### DESCRIPTION OF EMBODIMENTS

The following describes technical solutions in this application with reference to accompanying drawings.

The technical solutions in embodiments of this application may be applied to various communication systems, for example, a long term evolution (long term evolution, LTE) system, a worldwide interoperability for microwave access (worldwide interoperability for microwave access, WiMAX) communication system, new radio (new radio, NR) in a 5th generation (5th generation, 5G) system, or another communication system that may appear in the future.

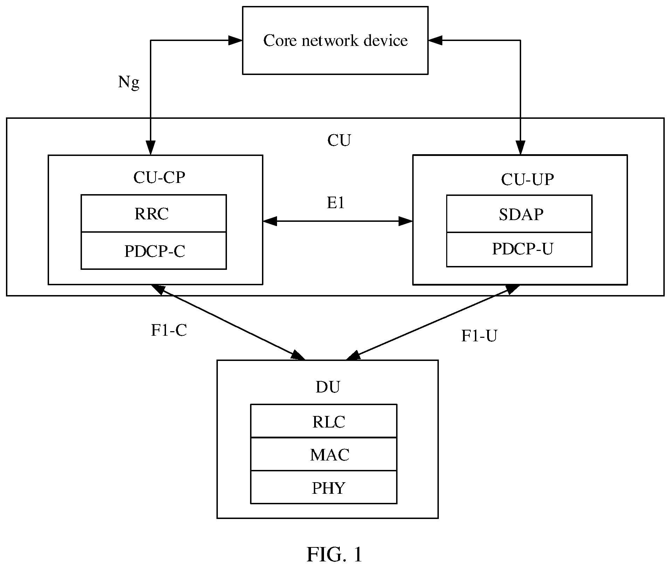

FIG. 1 is a schematic diagram of a communication system used in this application. As shown in FIG. 1, the system includes a core network device, a CU, and a DU. The CU may be divided into a CU-UP and a CU-CP. The CU-UP may also be referred to as a centralized unit user plane entity or a user plane entity. The CU-CP may also be referred to as a centralized unit control plane entity or a control plane entity. The core network device may communicate with the CU (for example, the CU-UP and/or the CU-CP). For example, the CU-CP may represent an access network device to be connected to the core network device through an Ng interface. The CU-UP may communicate with the CU-CP, for example, through an E1 interface. The CU-UP and the CU-CP may communicate with the DU. For example, the CU-CP may be connected to the DU through F1-C (a control plane), and the CU-UP is connected to the DU through F1-U (a user plane).

The core network device corresponds to different network elements in different systems. For example, in a 4G network, the core network device may correspond to a mobility management function (mobility management entity, MME) and/or a serving gateway (serving gateway, S-GW); and in a 5G network, the core network device may correspond to an access and mobility management function (access and mobility management function, AMF), a session management function (session management function, SMF), a user plane function (user plane function, UPF), or the like.

The access network device is divided into the CU and the DU from a perspective of a logical function. The access network device may be, for example, a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, or an access node in a Wi-Fi system. The CU and the DU may be physically separated or deployed together. A plurality of DUs may share one CU, or one DU may be connected to a plurality of CUs (not shown in the figure). The CU and the DU may be connected through an interface, for example, an F1 interface. The CU and the DU may be divided based on a protocol layer of a wireless network. For example, a possible division manner is that the CU is configured to perform functions of a radio resource control (radio resource control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a media access control (media access control, MAC) layer, a physical (physical) layer, and the like. It may be understood that the foregoing division is merely an example, and the CU and the DU may alternatively be divided in another manner. For example, the CU or the DU may have functions of more protocol layers through division. For example, the CU or the DU may alternatively have some processing functions of a protocol layer through division. In a possible implementation, some functions of an RLC layer and a function of a protocol layer above the RLC layer are set on the CU, and a remaining function of the RLC layer and a function of a protocol layer below the RLC layer are set on the DU. In another possible implementation, functions of the CU or the DU may alternatively be classified based on a service type or another system requirement. For example, division is performed based on a delay, a function whose processing time needs to satisfy a delay requirement is set on the DU, and a function whose processing time does not need to satisfy the delay requirement is set on the CU. In still another possible implementation, the CU may alternatively have one or more functions of a core network. One or more CUs may be disposed in a centralized manner or a separated manner. For example, the CUs may be disposed on a network side for ease of centralized management. The DU may have a plurality of radio frequency functions, or the radio frequency functions may be disposed remotely. It should be understood that functions of the CU and the DU may be set based on a requirement during specific implementation. This is not limited in embodiments of this application.

Functions of the CU may be implemented by one entity, or may be implemented by different entities. In a manner, the functions of the CU may be further divided into functions of a CP and functions of a UP. That is, the CU may be divided into the CU-UP and the CU-CP. The CU-CP and the CU-UP may be separately implemented by one physical device, or the CU-CP and the CU-UP may be deployed on a same physical device. The CU-CP and the CU-UP may be coupled to the DU, to jointly complete functions of the access network device. In a possible implementation, the CU-CP is responsible for control plane functions, mainly including RRC and PDCP-C. The PDCP-C is mainly responsible for encryption, decryption, integrity protection, data transmission, and the like of control plane data. The CU-UP is responsible for user plane functions, mainly including the SDAP and a PDCP-U. The SDAP is mainly responsible for processing data of the core network device and mapping a data flow (flow) to a bearer. The PDCP-U is mainly responsible for encryption, decryption, integrity protection, header compression, serial number maintenance, data transmission, and the like on a data plane. Another possible implementation is that PDCP-C is also in the CU-UP.

It should be understood that a protocol layer division manner shown in FIG. 1 is merely an example, and should not constitute any limitation on this application. In addition, the system shown in FIG. 1 may further include a terminal device that is not shown in the figure. The terminal device may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

In the wireless network, one terminal device may communicate with a plurality of access network devices, that is, dual connectivity (dual connectivity, DC), which is also referred to as multi-radio dual connectivity (Multi-Radio dual connectivity, MR-DC). The plurality of access network devices may be access network devices of a same standard (where for example, all are 4G access network devices or all are 5G access network devices), or may be access network devices of different mechanisms (where for example, one is a 4th generation 4G access network device, and the other is a 5th generation 5G access network device). The network side may provide a communication service for the terminal device by using resources of the plurality of access network devices, to provide high-rate transmission for the terminal device. In the DC, an access network device that exchanges control plane signaling with the core network device is referred to as a master node (master node, MN), and another access network device is referred to as a secondary node (secondary node, SN). It should be noted that the MN and the SN in the MR-DC may be in various forms and structures of the foregoing access network device. Optionally, the MN and the SN use a same CU but different DUs, or use a same DU but different CUs.

The following describes methods provided in this application. It should be noted that a CU-CP and a CU-UP described below may be implemented by one entity, or may be implemented by different entities.

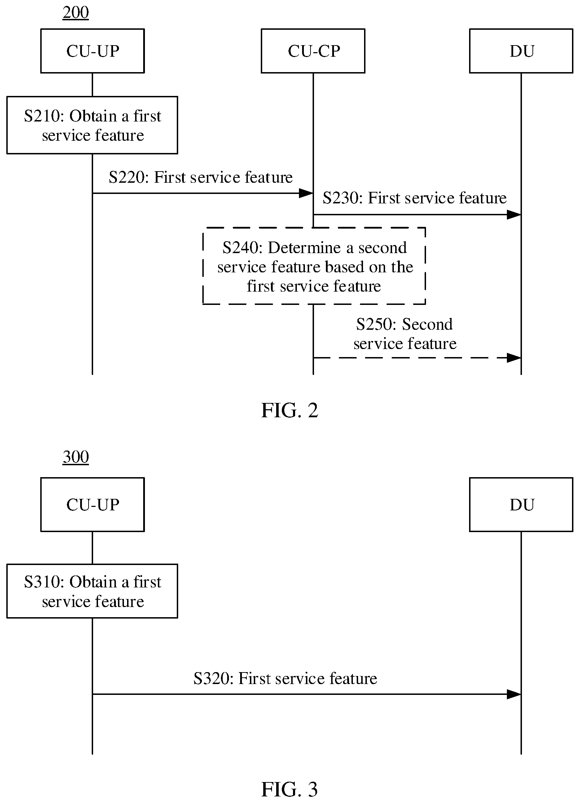

FIG. 2 is a schematic flowchart of a communication method according to this application. The following describes steps of the method 200 with reference to FIG. 2.

S210: A first network node obtains a first service feature of a service, where the first network node is a CU-UP.

For example, the first service feature may include one or more of the following: whether the service is a periodic service, a service packet size corresponding to the service, a service model corresponding to the service, scheduling time of the service, or a periodicity corresponding to the service when the service is a periodic service.

The service model may be, for example, one of the following: only a single uplink, only a single downlink, a single uplink followed by a single downlink, a single uplink followed by a plurality of downlinks, or a plurality of uplinks followed by a single downlink. The term "single/plurality" herein refers to a quantity of data packets.

Only the single uplink: The service has only an uplink data packet, and only one uplink data packet of the service is sent each time. A meaning of only the single downlink is similar to that of only the single uplink (that is, the service has only a downlink data packet, and only one downlink data packet of the service is sent each time). The single uplink followed by the single downlink: The service has both an uplink data packet and a downlink data packet, and only one downlink data packet of the service is sent after one uplink data packet of the service is sent each time. The single uplink followed by the plurality of downlinks: The service has both an uplink data packet and a downlink data packet, and only a plurality of downlink data packets of the service are sent after one uplink data packet of the service is sent each time. A meaning of the plurality of uplinks followed by the single downlink is similar to that of the single uplink followed by the plurality of downlinks.

The service model may alternatively be, for example, one of the following: only uplink transmission, only downlink transmission, or both uplink transmission and downlink transmission. Only the uplink transmission: The service has only an uplink data packet. Only the downlink transmission: The service has only a downlink data packet. Both the uplink transmission and the downlink transmission: The service has both an uplink data packet and a downlink data packet.

The scheduling time may be, for example, weekly scheduling time or daily scheduling time.

For example, a granularity corresponding to the first service feature may be any one of the following: a PDU session, a terminal device, a QoS flow, a DRB, or a slice.

Alternatively, this may be understood as that the first service feature is a service feature corresponding to a specific PDU session, terminal device, QoS flow, DRB, or slice, where the specific PDU session, terminal device, QoS flow, DRB, or slice corresponds to the service. For example, the first service feature may be a service feature corresponding to the specific QoS flow, for example, a QoS flow #1, where the QoS flow #1 corresponds to the service. The first service feature may be a service feature corresponding to the specific DRB, for example, a DRB #1, where the QoS flow carried on the DRB corresponds to the service.

It should be understood that for a same service, service features corresponding to different granularities may be different. For example, the QoS flow #1 corresponds to the DRB #1, and the QoS flow #1 and the DRB #1 correspond to a same service. However, the service feature corresponding to the QoS flow #1 may be the same as or different from the service feature corresponding to the DRB #1.

It should be further understood that, in S210, the first network node may obtain one or more service features of each of one or more services, and the one or more service features of each service may correspond to a same granularity or different granularities. This is not limited in this application. For example, in S210, the first network node may obtain one or more service features of a service #1, and obtain one or more service features of a service #2. The one or more service features of the service #1 may be, for example, a service feature of a slice #1 and a service feature of a slice #2, and the one or more service features of the service #2 may be, for example, service features of the QoS flow #1 and a QoS flow #2.

In S210, the CU-UP may obtain the first service feature in a plurality of manners. Examples are used for description below.

### Manner 1

The CU-UP may determine the first service feature based on algorithm information.

The algorithm information may include a first algorithm and/or parameter information corresponding to the first algorithm. For example, the algorithm information may be sent by a core network device to the CU-UP. For example, the algorithm information is directly sent by the core network device to the CU-UP, or is first sent by the core network device to a CU-CP and then sent by the CU-CP to the CU-UP. Alternatively, the algorithm information may be sent by another network element (for example, a network management platform) to the CU-UP.

For example, the CU-UP may have a service feature prediction function. For example, the CU-UP may predict a service feature based on a prediction algorithm and/or parameter information (or referred to as a prediction model) corresponding to the prediction algorithm, and a received data packet. For example, the CU-UP may predict, based on a data packet on the QoS flow #1 that is received in a specific time period or currently, the service feature (an example of the first service feature) of the QoS flow #1 by using the first algorithm (namely, an example of the prediction algorithm) and/or the parameter information corresponding to the first algorithm. For example, if the CU-UP receives only an uplink data packet on the QoS flow #1 in a period of time, it is considered that a service model of the service corresponding to the QoS flow #1 is only a single uplink. For example, the prediction algorithm may be an AI algorithm, for example, some specific algorithms (for example, a decision tree, naive Bayes classification, the least square method, or a support vector machine) in a supervised learning algorithm, some specific algorithms (for example, a cluster algorithm) in an unsupervised learning algorithm, or some specific algorithms in reinforcement learning. It should be understood that the first algorithm may be any one of the foregoing algorithms.

Optionally, the CU-UP may further send, to the core network device, a second algorithm and/or parameter information corresponding to the second algorithm. The first algorithm and the second algorithm may be the same, or may be different. The second algorithm may be, for example, any one of the foregoing algorithms, for example, the naive Bayes classification. For example, the second algorithm and/or the parameter information corresponding to the second algorithm may be directly sent by the CU-UP to the core network device. Alternatively, the second algorithm and/or the parameter information corresponding to the second algorithm may be first sent by the CU-UP to the CU-CP and then sent by the CU-CP to the core network device.

For example, in a process of predicting the service feature, the CU-UP may alternatively adjust the prediction algorithm and/or the parameter information corresponding to the prediction algorithm, and may send, to the core network device, a prediction algorithm (for example, the second algorithm) obtained through adjustment and/or parameter information (for example, the parameter information corresponding to the second algorithm) corresponding to the prediction algorithm obtained through adjustment. In this way, after the CU-UP is handed over, or when the terminal device enters a radio resource control (radio resource control, RRC) idle (RRC_idle) state and then enters an RRC connected (RRC_connected) state from the RRC_idle state, the core network device may send the information to a CU-UP (denoted as a target CU-UP below) that re-establishes a connection to the terminal device. For example, the prediction algorithm (for example, the second algorithm) obtained through adjustment and/or the parameter information corresponding to the prediction algorithm obtained through adjustment may be directly sent by the core network device to the target CU-UP, or may be first sent by the core network device to a CU-CP (denoted as a target CU-CP below) connected to the target CU-UP and then sent by the target CU-CP to the target CU-UP. In addition, it should be understood that the target CU-UP and the foregoing CU-UP may be a same CU-UP, or may not be the same CU-UP. After receiving the information sent by the core network device, the CU-UP may continue to perform prediction by using the information.

### Manner 2

The CU-UP may determine the first service feature based on assistance information.

For example, the CU-UP has a service feature prediction function, and the CU-UP may perform more refined prediction, for example, more accurate prediction, based on the assistance information. For example, the assistance information may include one or more service features of the service, and a type of a parameter in the service feature may be the same as a type of a parameter in the first service feature. In other words, the CU-UP may determine a current service feature of the service based on a previous service feature of the service.

The assistance information may be sent by a core network device or a network management platform. For example, the core network device or the network management platform may directly send the assistance information to the CU-UP. Alternatively, the core network device or the network management platform may send the assistance information to a CU-CP, and then the CU-CP forwards the assistance information to the CU-UP. For example, the assistance information may be determined and sent to the core network device by a CU-UP accessed by the terminal device last time.

Alternatively, the assistance information may be obtained by the CU-UP locally or from another CU-UP. For example, in a handover scenario, a source access network device sends the assistance information to a target access network device. For example, the assistance information is carried in a handover request message. For another example, in an MR-DC scenario, an MN sends the assistance information to an SN. For example, the assistance information is carried in an SN addition request message or an SN modification request message. The source access network device and the target access network device, or the source MN and the SN herein may correspond to a same CU-UP, or may correspond to different CU-UPs. In addition, the first algorithm and the parameter information corresponding to the first algorithm may also be obtained in the manner described herein.

### Manner 3

The CU-UP may obtain the first service feature locally or from another CU-UP.

For example, in a handover scenario, a source access network device may send the first service feature to a target access network device. For example, the first service feature is carried in a handover request message. For another example, in an MR-DC scenario, an MN may send the first service feature to an SN. For example, the first service feature is carried in an SN addition request message or an SN modification request message. The source access network device and the target access network device, or the source MN and the SN herein may correspond to a same CU-UP, or may correspond to different CU-UPs.

It should be understood that the CU-UP may determine the first service feature with reference to the foregoing three manners or any two of the foregoing three manners.

S220: The first network node sends the first service feature to a second network node, where the second network node is a CU-CP.

After the CU-CP receives the first service feature, there are two processing manners, which are separately described below.

### Manner 1:

S230: The CU-CP sends the first service feature to a third network node, where the third network node in the method 200 is a DU.

For example, after receiving the first service feature, the CU-CP may directly forward the first service feature to the DU.

Alternatively, if the CU-CP determines that the granularity corresponding to the first service feature is the same as a granularity corresponding to a service feature that the CU-CP needs to send to the DU, the CU-CP may send the first service feature to the DU. For example, if the first service feature is the service feature of the DRB #1, and the granularity of the service feature that the CU-CP needs to provide for the DU is also a DRB, the CU-CP may send the service feature of the DRB #1 to the DU.

### Manner 2:

S240: The CU-CP determines a second service feature of the service based on the first service feature, where the granularity corresponding to the first service feature is different from a granularity corresponding to the second service feature.

Optionally, the granularity corresponding to the second service feature may be any one of the following: a PDU session, a terminal device, a QoS flow, a DRB, or a slice.

S250: The CU-CP sends the second service feature to the DU.

For example, if the CU-CP determines that the granularity corresponding to the first service feature is different from the granularity corresponding to the service feature that the CU-CP needs to send to the DU, the CU-CP may determine the second service feature of the service based on the first service feature. For example, if the first service feature is the service feature of the QoS flow #1, and the granularity of the service feature that the CU-CP needs to provide for the DU is a DRB, the CU-CP may determine, based on the service feature of the QoS flow #1, the service feature (namely, an example of the second service feature) of the DRB #1 corresponding to the QoS flow #1. For example, the CU-CP may provide the service feature of the QoS flow #1 as the service feature of the DRB #1 for the DU, or the CU-CP may determine the service feature of the DRB #1 with reference to the service feature of the QoS flow #1 and a service feature of one or more other QoS flows corresponding to the DRB #1, and send the determined service feature of the DRB #1 to the DU.

After obtaining the first service feature or the second service feature, the DU may schedule or configure the service. For example, the DU may perform different scheduling or configuration based on the first service feature or the second service feature. For example, if the DU learns that the service is the periodic service, the DU may schedule the terminal device based on the periodicity corresponding to the service. For another example, the DU may configure a semi-persistent scheduling (semi-persistent scheduling, SPS) periodicity or discontinuous reception (discontinuous reception, DRX) configuration information based on the periodicity corresponding to the service. For another example, the DU selects, based on the service packet size corresponding to the service and/or the periodicity of the service, and the like, whether to configure a carrier aggregation function.

According to the communication method provided in this application, the CU-UP obtains the service feature, and the CU-CP sends the service feature or another service feature determined based on the service feature to the DU, so that the DU can schedule or configure the service based on the received service feature.

In addition, a service feature is usually provided by a core network for an access network device, but the service feature provided by the core network is usually a subscribed service feature that may be inconsistent with an actual service feature. Consequently, the access network device may fail to adapt to the service feature when scheduling or configuring a service. However, according to the communication method provided in this application, the CU-UP may obtain the service feature based on actual service data. In this way, the obtained service feature more conforms to an actually transmitted service, so that the DU can better adapt to the service during scheduling or configuration.

Optionally, after receiving the first service feature or obtaining the second service feature based on the first service feature, the CU-CP may further send the first service feature or the second service feature to the core network device.

In this way, when the terminal device returns from the RRC_idle state or an inactive (inactive) state to the RRC_connected state next time, the core network device may send the first service feature or the second service feature to the CU-UP, and the CU-UP may continue to predict or use the service feature based on the first service feature or the second service feature.

Optionally, after the CU-CP receives the first service feature, the CU-CP may alternatively perform some configuration based on the first service feature. For example, the CU-CP may select, based on the service packet size corresponding to the service and/or the periodicity of the service, and the like, whether to configure dual connectivity (dual-connectivity).

FIG. 3 is a schematic flowchart of another communication method according to this application, which is not part of the claimed invention. In the method 300, after obtaining a first service feature, a first network node may directly provide the first service feature for a DU.

S310: The first network node obtains the first service feature of a service, where the first network node is a CU-UP.

The step is the same as S210. Details are not described herein again.

S320: The first network node sends the first service feature to a third network node, where the third network node is the DU.

To be specific, the first network node may directly send the first service feature to the DU without forwarding the first service feature by a CU-CP.

According to the method provided in this application, the CU-UP obtains the service feature and provides the service feature for the DU, so that the DU can perform scheduling or configuration based on the received service feature. In addition, the CU-UP may obtain the service feature based on actual service data. In this way, the obtained service feature more conforms to an actually transmitted service, so that the DU can better adapt to the service during scheduling or configuration.

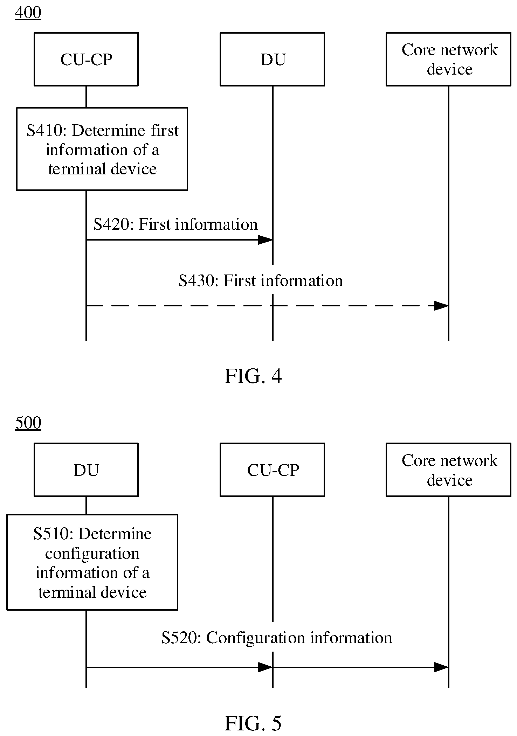

FIG. 4 is a schematic flowchart of another communication method according to this application, which is not part of the claimed invention. The following describes steps of the method 400 with reference to FIG. 4.

S410: A first network node determines first information of a terminal device, where the first network node is a CU-CP.

S420: The CU-CP sends the first information to a second network node, where the second network node is a DU.

For example, the first information may include one or more of the following: mobility information of the terminal device, battery information of the terminal device, or power consumption information of the terminal device.

The mobility information of the terminal device may indicate whether the terminal device is in a moving state or static. Optionally, the mobility information of the terminal device may further include a moving speed level, for example, a high speed, a medium speed, or a normal speed, of the terminal device in the moving state. Optionally, the mobility information of the terminal device may include beam (beam)-level mobility history information. The beam-level mobility history information is used to indicate a beam through which the terminal device passes and time during which the terminal device is located on the beam through which the terminal device passes. The beam through which the terminal device passes may be understood as a beam that provides a service for the terminal device. Optionally, the beam herein may be a synchronization signal and PBCH block (synchronization signal and pbch block, SSB) or a channel state information reference signal (channel state information reference signal, CSI-RS).

The battery information of the terminal device may indicate whether a battery of the terminal device is rechargeable, or indicate whether the terminal device is connected to a power supply.

The power consumption information of the terminal device may indicate a power consumption status, for example, target remaining power, of the battery of the terminal device.

In S410, the CU-CP may determine the first information in a plurality of manners. Examples are used for description below.

### Manner 1

The CU-CP may determine the first information based on algorithm information.

The algorithm information may include a first algorithm and/or parameter information corresponding to the first algorithm. For example, the algorithm information may be sent by a core network device, or may be sent by another network element (for example, a network management platform).

For example, the CU-CP has a prediction function. For example, the CU-UP may predict the first information based on a prediction algorithm and/or parameter information (or referred to as a prediction model) corresponding to the prediction algorithm. The prediction algorithm herein may be any algorithm described in the method 200. It should be understood that the first algorithm may be any prediction algorithm.

Optionally, the CU-CP may further send, to the core network device, a second algorithm and/or parameter information corresponding to the second algorithm. The first algorithm and the second algorithm may be the same, or may be different. The second algorithm may be, for example, some specific algorithms in a supervised learning algorithm or some specific algorithms in an unsupervised learning algorithm.

For example, in a prediction process, the CU-CP may alternatively adjust the prediction algorithm and/or the parameter information corresponding to the prediction algorithm, and may send, to the core network device, a prediction algorithm (for example, the second algorithm) obtained through adjustment and/or parameter information (for example, the parameter information corresponding to the second algorithm) corresponding to the prediction algorithm obtained through adjustment. In this way, after the CU-CP is handed over, or when the terminal device enters an RRC_idle state and then enters an RRC_connected state from the RRC_idle state, the core network device may send the information to a CU-CP (denoted as a target CU-CP below) that re-establishes a connection to the terminal device. It should be understood that the target CU-CP and the foregoing CU-CP may be a same CU-CP, or may not be the same CU-CP. After receiving the information sent by the core network device, the CU-CP may continue to perform prediction by using the information.

Based on the descriptions of the previous paragraph, it may be understood that the first algorithm and/or the parameter information corresponding to the first algorithm may be sent by a CU-CP to the core network device before the CU-CP is handed over or before the terminal device enters the RRC idle mode.

### Manner 2

The CU-CP may determine the first information based on assistance information.

For example, the CU-CP has a prediction function, and the CU-CP may perform more refined prediction, for example, more accurate prediction, based on the first information. For example, a type of a parameter in the assistance information may be the same as a type of a parameter in the first information, but a granularity of the assistance information may be different from a granularity of the first information. For example, the assistance information is at a cell granularity, and the first information is at a beam granularity. To be specific, the CU-CP may predict corresponding information at the beam granularity based on information at the cell granularity.

The assistance information may be sent by a core network device or a network management platform. For example, the assistance information may be determined and sent to the core network device by a CU-CP accessed by the terminal device last time.

Alternatively, the assistance information may be obtained by the CU-CP locally or from another CU-CP. For example, in a handover scenario, a source access network device sends the assistance information to a target access network device. For example, the assistance information is carried in a handover request message. For another example, in an MR-DC scenario, an MN sends the assistance information to an SN. For example, the assistance information is carried in an SN addition request message or an SN modification request message. The source access network device and the target access network device, or the source MN and the SN herein may correspond to a same CU-CP, or may correspond to different CU-CPs. In addition, the first algorithm and the parameter information corresponding to the first algorithm may also be obtained in the manner described herein.

Optionally, the foregoing two manners of determining the first information of the terminal device may be combined. To be specific, the terminal device may determine the first information of the terminal device based on the first algorithm and/or the parameter information corresponding to the first algorithm, and the assistance information.

Optionally, in this application, the CU-CP may alternatively use the first information to perform local configuration, for example, mobility measurement configuration.

In S420, the DU may receive the first information. After receiving the first information, the DU may configure a radio parameter for the terminal device based on the first information.

For example, the radio parameter may include one or more of the following: discontinuous reception (discontinuous reception, DRX) configuration information, beam configuration information, a length of a data inactivity timer (where when the terminal device does not receive or send any MAC service data unit (service data unit, SDU) within the timer, the terminal device releases an RRC connection to a network side, and enters the RRC idle state), whether to configure carrier aggregation, bandwidth that may be used for the terminal device, a maximum quantity of multiple input multiple output (multiple input multiple output, MIMO) layers that may be used for the terminal device, and the like.

Optionally, the method may further include: S430: The CU-CP sends the first information to the core network device.

The CU-CP may send the first information to the core network device. In this way, when the terminal device returns from the RRC_idle state or an inactive (inactive) state to the RRC_connected state next time, the core network device may send the first information to the CU-CP, and the CU-CP may continue to predict or use a service feature based on the first information.

In conclusion, according to the method provided in this application, the CU-UP may determine the first information representing some features of the terminal device, and the CU-UP may send the first information to the DU, so that the DU can configure an appropriate radio parameter for the terminal device based on the first information, to better serve the terminal device.

FIG. 5 is a schematic flowchart of another communication method according to this application, which is not part of the claimed invention. The following describes steps of the method 500 with reference to FIG. 5.

S510: A second network node determines configuration information of a terminal device, where the second network node is a DU.

S520: The DU sends the configuration information to a core network device by using a first network node, where the first network node is a CU-CP.

For example, the configuration information includes one or more of the following: a semi-persistent scheduling configuration, a multiple input multiple output MIMO configuration, a channel state information reference signal CSI-RS configuration, or a sounding reference signal SRS configuration.

For example, the semi-persistent scheduling configuration may include one or more of the following: a semi-persistent scheduling periodicity, a hybrid automatic repeat request (hybrid automatic repeat reQuest, HARQ) process number corresponding to semi-persistent scheduling, a modulation and coding scheme-table corresponding to semi-persistent scheduling, or a PUCCH resource corresponding to downlink semi-persistent scheduling.

The CSI-RS configuration may include one or more of the following: a frequency domain position, a port quantity, a time domain position, or a code domain type.

The SRS configuration may include one or more of the following: being periodic or aperiodic, a port quantity, a resource position, or the like.

The MIMO configuration may include a quantity of MIMO flows or the like.

In a manner, in S510, the DU may determine the configuration information based on algorithm information. The algorithm information may include a first algorithm and/or parameter information corresponding to the first algorithm. For example, the algorithm information may be sent by the core network device, or may be sent by another network element (for example, a network management platform).

For example, the DU has a prediction function. For example, the DU may predict the configuration information based on a prediction algorithm and/or parameter information (or referred to as a prediction model) corresponding to the prediction algorithm. The prediction algorithm herein may be any algorithm described in the method 200. It should be understood that the first algorithm may be any prediction algorithm.

Optionally, the DU may further send, to the CU-CP, a second algorithm and/or parameter information corresponding to the second algorithm. Further, the CU-CP may send, to the core network device, the second algorithm and/or the parameter information corresponding to the second algorithm. The first algorithm and the second algorithm may be the same, or may be different. The second algorithm may be, for example, some specific algorithms in a supervised learning algorithm or some specific algorithms in an unsupervised learning algorithm.

For example, in a prediction process, the DU may alternatively adjust the prediction algorithm and/or the parameter information corresponding to the prediction algorithm, and may send, to the CU-CP, a prediction algorithm (for example, the second algorithm) obtained through adjustment and/or parameter information (for example, the parameter information corresponding to the second algorithm) corresponding to the prediction algorithm obtained through adjustment. In this way, when the terminal device is handed over to a new DU, the CU-CP may send the information to the new DU, and the new DU may configure related information for UE by using the information.

In another manner, in S510, the DU may determine the configuration information based on assistance information.

For example, a type of a parameter in the assistance information may be the same as a type of a parameter in the configuration information of the terminal device.

The assistance information may be sent by the core network device or a network management platform. For example, the assistance information may be determined and sent to the core network device by a DU accessed by the terminal device last time.

Alternatively, the assistance information may be obtained by the DU locally or from another DU. For example, in a handover scenario, a source access network device sends the assistance information to a target access network device. For example, the assistance information is carried in a handover request message. For another example, in an MR-DC scenario, an MN sends the assistance information to an SN. For example, the assistance information is carried in an SN addition request message or an SN modification request message. The source access network device and the target access network device, or the source MN and the SN herein may correspond to a same DU, or may correspond to different DUs. In addition, the first algorithm and the parameter information corresponding to the first algorithm may also be obtained in the manner described herein.

Optionally, the foregoing two manners of determining the configuration information may be combined. To be specific, the terminal device may determine the configuration information based on the first algorithm and/or the parameter information corresponding to the first algorithm, and the assistance information.

In S520, the DU first sends the configuration information to the CU-CP, and then the CU-CP sends the configuration information to the core network device.

In this way, when the terminal device returns from an RRC_idle state or an inactive state to an RRC_connected state next time, the core network device may send the configuration information to the corresponding DU, and the corresponding DU may continue to predict or use a service feature based on the configuration information.

In the method provided in this application, the DU may send the configuration information of the terminal device to the core network device, so that the subsequent DU schedules or configures a radio parameter.

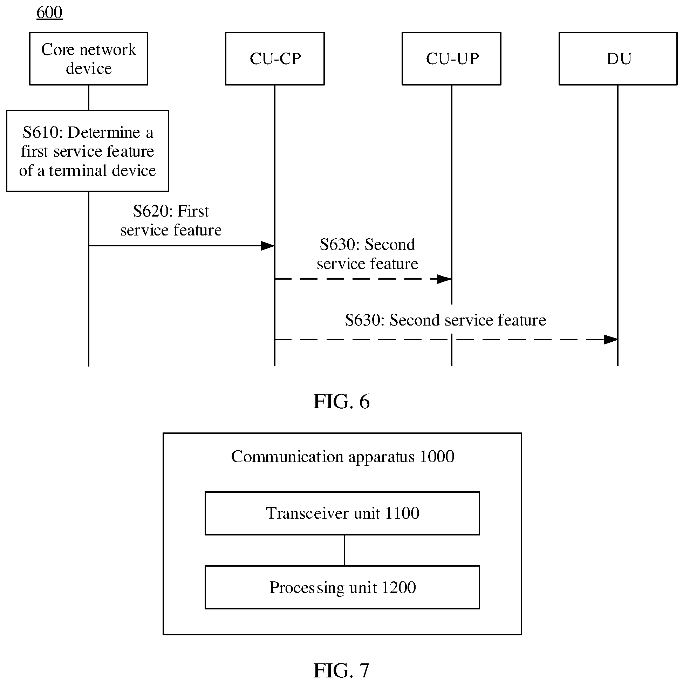

FIG. 6 is a schematic flowchart of another communication method according to this application, which is not part of the claimed invention. The following describes steps of the method 600 with reference to FIG. 6.

S610: A core network device determines a first service feature of a service.

For example, the first service feature may include one or more of the following: whether the service is a periodic service, a service packet size corresponding to the service, a service model corresponding to the service, scheduling time of the service, a delay requirement of the service, or a periodicity corresponding to the service when the service is a periodic service.

Optionally, an uplink delay requirement and a downlink delay requirement may be distinguished. To be specific, if the service is an uplink service, the delay requirement is the uplink delay requirement. If the service is a downlink service, the delay requirement is the downlink delay requirement. If the service includes both an uplink service and a downlink service, the delay requirement includes the uplink delay requirement and the downlink delay requirement.

It should be understood that, for meanings of the service model and the scheduling time, refer to the descriptions in the method 200.

For example, a granularity corresponding to the first service feature may be any one of the following: a PDU session, a QoS flow, a DRB, or a slice.

Alternatively, this may be understood as that the first service feature is a service feature corresponding to a specific PDU session, QoS flow, DRB, or slice, where the specific PDU session, QoS flow, DRB, or slice corresponds to the service. For example, the first service feature may be a service feature corresponding to the specific QoS flow, for example, a QoS flow #1, where the QoS flow #1 corresponds to the service.

It should be understood that for a same service, service features corresponding to different granularities may be different. For example, the QoS flow #1 corresponds to a DRB #1, and the QoS flow #1 and the DRB #1 correspond to a same service. However, the service feature corresponding to the QoS flow #1 may be the same as or different from a service feature corresponding to the DRB #1.

It should be further understood that, in S610, a first network node may obtain one or more service features of each of one or more services, and the one or more service features of each service may correspond to a same granularity or different granularities. This is not limited in this application. For example, in S610, the first network node may obtain one or more service features of a service #1, and obtain one or more service features of a service #2. The one or more service features of the service #1 may be, for example, a service feature of a slice #1 and a service feature of a slice #2, and the one or more service features of the service #2 may be, for example, service features of the QoS flow #1 and a QoS flow #2.

S620: The core network device sends the first service feature to the first network node, where the first network node is a CU-CP.

S630: The CU-CP sends a second service feature to a second network node, where the second network node is a CU-UP or a DU.

The first service feature and the second service feature may be the same, or may be different. For example, the second service feature may be a PDU session, a QoS flow, a DRB, or a slice.

For example, after receiving the first service feature, the CU-CP may directly forward the first service feature to the second network node.

Alternatively, if the CU-CP determines that the granularity corresponding to the first service feature is the same as a granularity corresponding to a service feature that the CU-CP needs to send to the second network node, the CU-CP may send the first service feature to the second network node. For example, if the first service feature is the service feature of the DRB #1, and the granularity of the service feature that the CU-CP needs to provide for the second network node is also a DRB, the CU-CP may send the service feature of the DRB #1 to the second network node.

Alternatively, if the CU-CP determines that the granularity corresponding to the first service feature is different from a granularity corresponding to a service feature that the CU-CP needs to send to the second network node, the CU-CP may determine the second service feature of the service based on the first service feature. For example, if the first service feature is the service feature of the QoS flow #1, and the granularity of the service feature that the CU-CP needs to provide for the second network node is a DRB, the CU-CP may determine, based on the service feature of the QoS flow #1, the service feature (namely, an example of the second service feature) of the DRB #1 corresponding to the QoS flow #1. For example, the CU-CP may provide the service feature of the QoS flow #1 as the service feature of the DRB #1 for the second network node, or the CU-CP may determine the service feature of the DRB #1 with reference to the service feature of the QoS flow #1 and a service feature of one or more other QoS flows corresponding to the DRB #1, and send the determined service feature of the DRB #1 to the second network node. For another example, for the delay requirement of the service, assuming that the delay requirement of the service in the first service feature is a first granularity, the CU-CP may decompose a value of a delay requirement of a first-granularity service into entities (for example, a delay that needs to be ensured on a CU-UP side, a delay that needs to be ensured on an F1-U interface, a delay that needs to be ensured on a DU side, and a delay that needs to be ensured on a terminal device side), and the CU-CP notifies the CU-UP and the DU of delay requirements on the entities. For example, for a downlink, the CU-CP may decompose a downlink delay requirement into a CU-UP delay, an F1 interface delay, a delay on the DU side, and a delay on the terminal device side. The CU-CP notifies the CU-CP of the delay requirements on the CU-UP and the F1 interface, and sends the delay requirement on the DU side to the DU. In this way, the CU-UP and the DU can adjust processing of a corresponding service based on a corresponding delay requirement, to satisfy the corresponding delay requirement.

In a current technology, the core network device may provide a service feature at a terminal device granularity for an access network device. However, in the method provided in this application, the core network device may send service features at smaller granularities to the CU-UP or the DU, so that the CU-UP or the DU can perform more accurate scheduling and resource allocation based on the service features at the smaller granularities, to better provide a communication service for the terminal device.

It should be understood that sequence numbers of the foregoing processes do not mean execution sequences in various embodiments of this application. The execution sequences of the processes should be determined based on functions and internal logic of the processes. Numbers or sequence numbers in the foregoing processes are merely used for differentiation for ease of description, and should not constitute any limitation on an implementation process of embodiments of this application.

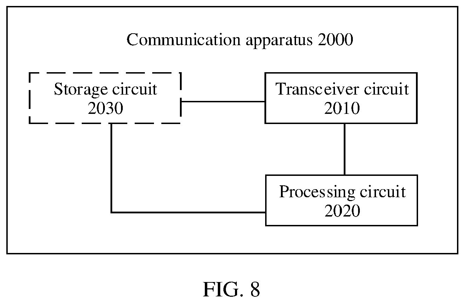

The methods provided in embodiments of this application are described above in detail with reference to FIG. 2 to FIG. 6. Apparatuses provided in embodiments of this application are described below in detail with reference to FIG. 7 and FIG. 8.

FIG. 7 is a schematic block diagram of a communication apparatus according to an embodiment of this application. As shown in FIG. 7, the communication apparatus 1000 may include a transceiver unit 1100 and a processing unit 1200.

The transceiver unit 1100 may be configured to receive information sent by another apparatus, and may be further configured to send information to another apparatus. The processing unit 1200 may be configured to perform internal processing of the apparatus.

In a possible design, the communication apparatus 1000 may correspond to the first network node (namely, the CU-UP) in the method 200. For example, the communication apparatus 1000 may be the first network node or a chip disposed in the first network node. The communication apparatus 1000 may include units configured to perform operations performed by the first network node in the method, and the units in the communication apparatus 1000 are separately configured to implement the operations performed by the first network node in the method.

Specifically, the processing unit 1200 is configured to obtain a first service feature of a service, where the first service feature includes one or more of the following: whether the service is a periodic service, a periodicity corresponding to the service when the service is a periodic service, a service packet size corresponding to the service, a service model corresponding to the service, or scheduling time of the service. The transceiver unit 1100 is configured to send the first service feature to a second network node (namely, a CU-CP).

Optionally, a granularity corresponding to the first service feature is any one of the following: a protocol data unit PDU session, a terminal device, a quality of service QoS flow, a data radio bearer DRB, or a slice.

Optionally, the transceiver unit 1100 is further configured to receive algorithm information sent by a core network device, where the algorithm information includes a first algorithm and/or parameter information corresponding to the first algorithm. The processing unit 1200 is specifically configured to determine the first service feature based on the algorithm information.

Optionally, the transceiver unit 1100 is specifically configured to receive, by using the second network node, the algorithm information sent by the core network device.

Optionally, the transceiver unit 1100 is further configured to send, to the core network device, a second algorithm and/or parameter information corresponding to the second algorithm.

Optionally, the processing unit 1200 is specifically configured to determine the first service feature based on assistance information sent by the core network device or another network node, where the assistance information includes one or more of the following: whether the service is a periodic service, a periodicity corresponding to the service when the service is a periodic service, a service packet size corresponding to the service, a service model corresponding to the service, or scheduling time of the service, and the assistance information is the same as or different from the service feature.

In a possible design, the communication apparatus 1000 may correspond to the second network node (namely, the CU-CP) in the method 200. For example, the communication apparatus 1000 may be the second network node or a chip disposed in the second network node. The communication apparatus 1000 may include units configured to perform operations performed by the second network node in the method, and the units in the communication apparatus 1000 are separately configured to implement the operations performed by the second network node in the method.

Specifically, the transceiver unit 1100 is configured to receive a first service feature that is of a service and that is sent by a first network node (namely, a CU-UP), where the first service feature includes one or more of the following: whether the service is a periodic service, a periodicity corresponding to the service when the service is a periodic service, a service packet size corresponding to the service, a service model corresponding to the service, or scheduling time of the service.

Optionally, the transceiver unit 1100 is further configured to send the first service feature to a third network node, where the third network node is a distributed unit.

Optionally, the processing unit 1200 is configured to determine a second service feature of the service, where a granularity corresponding to the first service feature is different from a granularity corresponding to the second service feature. The transceiver unit 1100 is further configured to send the second service feature to a third network node, where the third network node is a distributed unit.

Optionally, the granularity corresponding to the first service feature is any one of the following: a protocol data unit PDU session, a terminal device, a quality of service QoS flow, a data radio bearer DRB, or a slice.

In a possible design, the communication apparatus 1000 may correspond to the first network node (namely, the CU-UP) in the method 300. For example, the communication apparatus 1000 may be the first network node or a chip disposed in the first network node. The communication apparatus 1000 may include units configured to perform operations performed by the first network node in the method, and the units in the communication apparatus 1000 are separately configured to implement the operations performed by the first network node in the method.

Specifically, the processing unit 1200 is configured to obtain a first service feature of a service, where the first service feature includes one or more of the following: whether the service is a periodic service, a periodicity corresponding to the service when the service is a periodic service, a service packet size corresponding to the service, a service model corresponding to the service, or scheduling time of the service. The transceiver unit 1100 is configured to send the first service feature to a third network node (namely, a DU).

In a possible design, the communication apparatus 1000 may correspond to the third network node (namely, the DU) in the method 300. For example, the communication apparatus 1000 may be the third network node or a chip disposed in the third network node. The communication apparatus 1000 may include units configured to perform operations performed by the third network node in the method, and the units in the communication apparatus 1000 are separately configured to implement the operations performed by the third network node in the method.

Specifically, the transceiver unit 1100 is configured to receive a first service feature that is of a service and that is sent by a first network node (namely, a CU-UP), where the first service feature includes one or more of the following: whether the service is a periodic service, a periodicity corresponding to the service when the service is a periodic service, a service packet size corresponding to the service, a service model corresponding to the service, or scheduling time of the service.

In a possible design, the communication apparatus 1000 may correspond to the first network node (namely, the CU-CP) in the method 400. For example, the communication apparatus 1000 may be the first network node or a chip disposed in the first network node. The communication apparatus 1000 may include units configured to perform operations performed by the first network node in the method, and the units in the communication apparatus 1000 are separately configured to implement the operations performed by the first network node in the method.

Specifically, the processing unit 1200 is configured to determine first information of a terminal device, where the first information includes one or more of the following: mobility information of the terminal device, battery information of the terminal device, or power consumption information of the terminal device. The transceiver unit 1100 is configured to send the first information to a second network node, where the second network node is a distributed unit.

Optionally, the processing unit 1200 is specifically configured to determine the first information based on algorithm information and/or assistance information, where the algorithm information includes a first algorithm and/or parameter information corresponding to the first algorithm, the assistance information includes one or more of the following: mobility information of the terminal device, battery information of the terminal device, or power consumption information of the terminal device, and the assistance information is the same as or different from the first information.

Optionally, the transceiver unit 1100 is further configured to send the algorithm information to a core network device.

Optionally, the transceiver unit 1100 is further configured to send the first information to the core network device.

In a possible design, the communication apparatus 1000 may correspond to the second network node (namely, the DU) in the method 400. For example, the communication apparatus 1000 may be the second network node or a chip disposed in the second network node. The communication apparatus 1000 may include units configured to perform operations performed by the second network node in the method, and the units in the communication apparatus 1000 are separately configured to implement the operations performed by the second network node in the method.

Specifically, the transceiver unit 1100 is configured to receive first information that is of a terminal device and that is sent by a first network node, where the first network node is a centralized unit control plane, and the first information includes one or more of the following: mobility information of the terminal device, battery information of the terminal device, or power consumption information of the terminal device.

Optionally, the processing unit 1200 is configured to configure a radio parameter for the terminal device based on the first information.

In a possible design, the communication apparatus 1000 may correspond to the second network node (namely, the DU) in the method 500. For example, the communication apparatus 1000 may be the second network node or a chip disposed in the second network node. The communication apparatus 1000 may include units configured to perform operations performed by the second network node in the method, and the units in the communication apparatus 1000 are separately configured to implement the operations performed by the second network node in the method.

Specifically, the processing unit 1200 is configured to determine configuration information of a terminal device, where the configuration information includes one or more of the following: a semi-persistent scheduling configuration, a multiple input multiple output MIMO configuration, a channel state information reference signal CSI-RS configuration, or a sounding reference signal SRS configuration. The transceiver unit 1100 is configured to send the configuration information to a core network device by using a first network node, where the first network node is a centralized unit control plane.

Optionally, the processing unit 1200 is specifically configured to determine the configuration information based on algorithm information and/or assistance information, where the algorithm information includes a first algorithm and/or parameter information corresponding to the first algorithm, the assistance information includes one or more of the following information of the terminal device: a semi-persistent scheduling configuration, a MIMO configuration, a CSI-RS configuration, or an SRS configuration, and the assistance information is the same as or different from the configuration information.

Optionally, the transceiver unit 1100 is further configured to send the algorithm information to the first network node.

In a possible design, the communication apparatus 1000 may correspond to the core network device in the method 500. For example, the communication apparatus 1000 may be the core network device or a chip disposed in the core network device. The communication apparatus 1000 may include units configured to perform operations performed by the core network device in the method, and the units in the communication apparatus 1000 are separately configured to implement the operations performed by the core network device in the method.

Specifically, the transceiver unit 1100 is configured to receive, by using a first network node, configuration information that is of a terminal device and that is sent by a second network node, where the first network node is a centralized unit control plane, the second network node is a distributed unit, and the configuration information includes one or more of the following: a semi-persistent scheduling configuration, a multiple input multiple output MIMO configuration, a channel state information reference signal CSI-RS configuration, or a sounding reference signal SRS configuration.

Optionally, the transceiver unit 1100 is further configured to send the configuration information to another DU.

Optionally, the transceiver unit 1100 is further configured to send assistance information to the second network node, where the assistance information is used by the second network node to determine the configuration information, and the assistance information includes one or more of the following information of the terminal device: a semi-persistent scheduling configuration, a MIMO configuration, a CSI-RS configuration, or an SRS configuration.

In a possible design, the communication apparatus 1000 may correspond to the first network node (namely, the CU-CP) in the method 600. For example, the communication apparatus 1000 may be the first network node or a chip disposed in the first network node. The communication apparatus 1000 may include units configured to perform operations performed by the first network node in the method, and the units in the communication apparatus 1000 are separately configured to implement the operations performed by the first network node in the method.

Specifically, the transceiver unit 1100 is configured to: receive a first service feature that is of a service and that is sent by a core network device, where a granularity corresponding to the first service feature is any one of the following: a protocol data unit PDU session, a quality of service QoS flow, a data radio bearer DRB, or a slice; and send a second service feature of the service to a second network node based on the first service feature, where the second network node is a centralized unit user plane or a distributed unit, and a granularity corresponding to the second service feature is any one of the following: a PDU session, a QoS flow, a DRB, or a slice.

Optionally, the first service feature includes one or more of the following: whether the service is a periodic service, a periodicity corresponding to the service when the service is a periodic service, a service packet size corresponding to the service, a service model corresponding to the service, scheduling time of the service, or a delay requirement of the service.

In a possible design, the communication apparatus 1000 may correspond to the core network device in the method 600. For example, the communication apparatus 1000 may be the core network device or a chip disposed in the core network device. The communication apparatus 1000 may include units configured to perform operations performed by the core network device in the method, and the units in the communication apparatus 1000 are separately configured to implement the operations performed by the core network device in the method.

Specifically, the processing unit 1200 is configured to determine a first service feature of a service. The transceiver unit 1100 is configured to send the first service feature to a first network node, where the first network node is a centralized unit control plane, and a granularity corresponding to the first service feature is any one of the following: a protocol data unit PDU session, a quality of service QoS flow, a data radio bearer DRB, or a slice.

Optionally, the first service feature includes one or more of the following: whether the service is a periodic service, a periodicity corresponding to the service when the service is a periodic service, a service packet size corresponding to the service, a service model corresponding to the service, scheduling time of the service, or a delay requirement of the service.

In a possible design, the communication apparatus 1000 may correspond to the second network node (namely, the CU-CP or the DU) in the method 600. For example, the communication apparatus 1000 may be the second network node or a chip disposed in the second network node. The communication apparatus 1000 may include units configured to perform operations performed by the second network node in the method, and the units in the communication apparatus 1000 are separately configured to implement the operations performed by the second network node in the method.

Specifically, the transceiver unit 1100 is configured to receive a second service feature that is of a service and that is sent by a first network node, where the first network node is a centralized unit control plane, and a granularity corresponding to the second service feature is any one of the following: a protocol data unit PDU session, a quality of service QoS flow, a data radio bearer DRB, or a slice.

Optionally, the second service feature includes one or more of the following: whether the service is a periodic service, a periodicity corresponding to the service when the service is a periodic service, a service packet size corresponding to the service, a service model corresponding to the service, scheduling time of the service, or a delay requirement of the service.

It should be understood that a specific process in which the units perform the foregoing corresponding steps has been described in detail in the foregoing method embodiments. For brevity, details are not described herein again.

It should be further understood that the transceiver unit 1100 in the communication apparatus 1000 may correspond to a transceiver circuit 2010 shown in FIG. 8, and the processing unit 1200 in the communication apparatus 1000 may correspond to a processing circuit 2020 shown in FIG. 8.

FIG. 8 is a schematic diagram of a structure of a communication apparatus 2000 according to an embodiment of this application. The apparatus 2000 may be used in the system shown in FIG. 1, to perform operations performed by the network elements in the foregoing method embodiments. As shown in FIG. 8, the apparatus 2000 includes a transceiver circuit 2010 and a processing circuit 2020.

Optionally, the apparatus 2000 further includes a storage circuit 2030. For example, the transceiver circuit 2010 may be a transceiver, the processing circuit 2020 may be a processor, and the storage circuit 2030 may be a memory. The transceiver circuit 2010, the processing circuit 2020, and the storage circuit 2030 may communicate with each other by using an internal connection path to transfer a control or data signal. The storage circuit 2030 is configured to store a computer program. The processing circuit 2020 is configured to invoke the computer program from the storage circuit 2030 and run the computer program, to control the transceiver circuit 2010 to send and receive signals.

The processing circuit 2020 and the storage circuit 2030 may be integrated into one processing apparatus. The processing circuit 2020 is configured to execute program code stored in the storage circuit 2030, to implement the foregoing functions. During specific implementation, the storage circuit 2030 may also be integrated into the processing circuit 2020, or may be independent of the processing circuit 2020.

It should be understood that the apparatus 2000 shown in FIG. 8 can implement a function of any network in any one of the method 200 to the method 600. The operations or the functions of the modules in the apparatus 2000 are separately used to implement corresponding procedures in the foregoing method embodiments. For details, refer to the descriptions in the foregoing method embodiments. To avoid repetition, detailed descriptions are appropriately omitted herein.

According to the methods provided in embodiments of this application, this application further provides a computer program product. The computer program product includes computer program code. When the computer program code is run on a computer, the computer is enabled to perform an operation performed by any network element in the foregoing method embodiments.

According to the methods provided in embodiments of this application, this application further provides a computer-readable medium. The computer-readable medium stores program code. When the program code is run on a computer, the computer is enabled to perform an operation performed by any network element in the foregoing method embodiments.

According to the methods provided in embodiments of this application, this application further provides a system. The system includes one or more network elements in the DU, the CU-CP, the CU-CP, and the core network device.

An embodiment of this application further provides a processing apparatus, including a processor and an interface. The processor is configured to perform the methods in the foregoing method embodiments.

It should be understood that the processing apparatus may be a chip. For example, the processing apparatus may be a field programmable gate array (field programmable gate array, FPGA), may be a general-purpose processor, a digital signal processor (digital signal processor, DSP), an application specific integrated circuit (application specific integrated circuit, ASIC), the field programmable gate array (field programmable gate array, FPGA), another programmable logic device, a discrete gate, a transistor logic device, or a discrete hardware component, may be a system on chip (system on chip, SoC), may be a central processing unit (central processor unit, CPU), may be a network processor (network processor, NP), may be a digital signal processing circuit (digital signal processor, DSP), may be a micro controller unit (micro controller unit, MCU), or may be a programmable controller (programmable logic device, PLD) or another integrated chip. The processing apparatus may implement or perform the methods, the steps, and logical block diagrams that are disclosed in embodiments of this application. The general-purpose processor may be a microprocessor or the processor may be any conventional processor or the like. Steps of the methods disclosed with reference to embodiments of this application may be directly performed and completed by using a hardware decoding processor, or may be performed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in a memory. The processor reads information in the memory and completes the steps in the foregoing methods in combination with hardware of the processor.

It may be understood that the memory in embodiments of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include but is not limited to these memories and any memory of another appropriate type.

All or some of the foregoing embodiments may be implemented by using software, hardware, firmware, or any combination thereof. When the software is used to implement embodiments, embodiments may be implemented completely or partially in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disc, SSD)), or the like.

The network device and the terminal device in the foregoing apparatus embodiments completely correspond to the network device and the terminal device in the method embodiments. A corresponding module or unit performs a corresponding step. For example, the communication unit (the transceiver) performs a receiving or sending step in the method embodiments, and a step other than the sending step and the receiving step may be performed by the processing unit (the processor). For a function of a specific unit, refer to a corresponding method embodiment. There may be one or more processors.

The terms such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, a thread of execution, a program, or a computer. As illustrated by using figures, both a computing device and an application that runs on the computing device may be components. One or more components may reside within a process or a thread of execution, and a component may be located on one computer or distributed between two or more computers. In addition, these components may be executed by various computer-readable media that store various data structures. For example, the components may communicate by using a local or remote process based on a signal having one or more data packets (for example, data from two components interacting with another component in a local system, a distributed system, or across a network such as the internet interacting with another system by using the signal).

It should be understood that, an "embodiment" mentioned throughout this specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be understood that, in embodiments of this application, numbers "first", "second", and the like are merely used to distinguish between different objects, for example, to distinguish between different network devices, and do not constitute a limitation on the scope of embodiments of this application. Embodiments of this application are not limited thereto.

It should be further understood that, in this application, "when" and "if" mean that a network element performs corresponding processing in an objective situation, and are not intended to limit time, and the network element is not necessarily required to have a determining action during implementation, and do not mean any other limitation.

It should be further understood that, in this application, "at least one" means one or more, and "a plurality of" means two or more.

It should be further understood that in embodiments of this application, "B corresponding to A" indicates that B is associated with A, and B may be determined based on A. However, it should be further understood that determining B based on A does not mean that B is determined based only on A. B may also be determined based on A and/or other information.

It should be further understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression used in this application similar to an expression that "an item includes one or more of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that in embodiments of this application, the terminal device and/or the network device may perform some or all of the steps in embodiments of this application. These steps or operations are merely examples.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing systems, apparatuses, and units, refer to a corresponding process in the foregoing method embodiments, and details are not described herein again.

In the several embodiments provided in this application, it should be understood that the disclosed systems, apparatuses, and methods may be implemented in other manners. For example, the foregoing apparatus embodiments are merely examples. For example, division into the units is merely logical function division and may be other division during actual implementation. For example, a plurality of units or components may be combined or integrated into another system. In addition, the displayed or discussed mutual coupling or direct coupling or communication connection may be implemented by using some interfaces. The indirect coupling or communication connection between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in the computer-readable storage medium. Based on such an understanding, the technical solutions in this application essentially, the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes: any medium that can store program code, such as a USB flash drive, a removable hard disk, a read-only memory ROM, a random access memory RAM, a magnetic disk, or an optical disc.

## Claims

1. A communication method, comprising:
receiving (S220), by a second network node, a first service feature that is of a service and that is sent by a first network node and that is obtained by the first service node based on actual service data, wherein the first network node is a centralized unit user plane, the second network node is a centralized unit control plane, and the first service feature comprises one or more of the following: whether the service is a periodic service, a periodicity corresponding to the service when the service is a periodic service, a service packet size corresponding to the service, a service model corresponding to the service, or scheduling time of the service; wherein a service model is one of: only a single uplink, only a single downlink, a single uplink followed by a single downlink, a single uplink followed by a plurality of downlinks, or a plurality of uplinks followed by a single downlink, where the terms "single" and "plurality" refer to a quantity of data packets;
**characterized in that** the method further comprises:
sending (S230), by the second network node, the first service feature to a third network node, wherein the third network node is a distributed unit; or
determining (S240), by the second network node, a second service feature of the service based on the first service feature, wherein a granularity corresponding to the first service feature is different from a granularity corresponding to the second service feature, and sending (S250), by the second network node, the second service feature to the third network node, wherein the third network node is the distributed unit

2. The method according to claim 1, further comprising:
obtaining (S210), by the first network node, the first service feature; and
sending (S220), by the first network node, the first service feature to the second network node.

3. The method according to claim 1 or claim 2, wherein a granularity corresponding to the first service feature is any one of the following: a protocol data unit, PDU, session, a terminal device, a quality of service, QoS, flow, a data radio bearer, DRB, or a slice.

4. The method according to any of claims 1 to 3, wherein the method further comprises:
receiving, by the first network node, algorithm information sent by a core network device, wherein the algorithm information comprises a first algorithm and/or parameter information corresponding to the first algorithm; and
the obtaining, by a first network node, a first service feature of a service comprises:
determining, by the first network node, the first service feature based on the algorithm information.

5. The method according to claim 4, wherein the receiving, by the first network node, algorithm information sent by a core network device comprises:
receiving, by the first network node by using the centralized unit control plane, the algorithm information sent by the core network device.

6. The method according to any one of claims 1 to 5, wherein the method further comprises:
sending, by the first network node to the core network device, a second algorithm and/or parameter information corresponding to the second algorithm.

7. The method according to any one of claims 1 to 6, wherein the obtaining, by a first network node, a first service feature of a service comprises:
determining, by the first network node, the first service feature based on assistance information sent by the core network device or another network node, wherein the assistance information comprises one or more of the following:
whetner the service is a periodic service, a periodicity correspondig to the service when the service is a periodic service, a service packet size corresponding to the service, a service model corresponding to the service, or scheduling time of the service, and the assistance information is the same as or different from the service feature.

8. A communication apparatus (1000), comprising units configured to perform the method according to claim 1

9. A computer- readable storage medium, wherein the computer-readable storage medium stores a computer program or instructions; and when the computer program or the instructions are executed by a computer associated with a second network node, the second network node is caused to perform the method according to claim 1.

10. A computer program product, comprising computer program instructions, wherein the computer program instructions, when executed by a computer associated with a second network node, cause the second network node to perform the method according to claim 1.

## Patentansprüche

1. Kommunikationsverfahren, das umfasst:
Empfangen (S220), durch einen zweiten Netzwerkknoten, eines ersten Dienstmerkmals, das zu einem Dienst gehört und das durch einen ersten Netzwerkknoten gesendet wird und das durch den ersten Dienstknoten basierend auf tatsächlichen Dienstdaten erhalten wird, wobei der erste Netzwerkknoten eine Zentraleinheitsbenutzerebene ist, der zweite Netzwerkknoten eine Zentraleinheitssteuerebene ist und das erste Dienstmerkmal eines oder mehrere der Folgenden umfasst: ob der Dienst ein periodischer Dienst ist, eine dem Dienst entsprechende Periodizität, wenn der Dienst ein periodischer Dienst ist, eine dem Dienst entsprechende Dienstpaketgröße, ein dem Dienst entsprechendes Dienstmodell oder eine Planungszeit des Dienstes; wobei ein Dienstmodell eines ist von: nur ein einzelner Uplink, nur ein einzelner Downlink, ein einzelner Uplink, gefolgt von einem einzelnen Downlink, ein einzelner Uplink, gefolgt von einer Vielzahl von Downlinks, oder eine Vielzahl von Uplinks, gefolgt von einem einzelnen Downlink, wobei sich die Begriffe "einzeln" und "Vielzahl" auf eine Quantität von Datenpaketen beziehen;
**dadurch gekennzeichnet, dass** das Verfahren ferner umfasst:
Senden (S230), durch den zweiten Netzwerkknoten, des ersten Dienstmerkmals an einen dritten Netzwerkknoten, wobei der dritte Netzwerkknoten eine verteilte Einheit ist; oder
Bestimmen (S240), durch den zweiten Netzwerkknoten, eines zweiten Dienstmerkmals des Dienstes basierend auf dem ersten Dienstmerkmal, wobei sich eine dem ersten Dienstmerkmal entsprechende Granularität von einer dem zweiten Dienstmerkmal entsprechenden Granularität unterscheidet, und Senden (S250), durch den zweiten Netzwerkknoten, des zweiten Dienstmerkmals an den dritten Netzwerkknoten, wobei der dritte Netzwerkknoten die verteilte Einheit ist.

2. Verfahren nach Anspruch 1, das ferner umfasst:
Erhalten (S210), durch den ersten Netzwerkknoten, des ersten Dienstmerkmals; und
Senden (S220), durch den ersten Netzwerkknoten, des ersten Dienstmerkmals an den zweiten Netzwerkknoten.

3. Verfahren nach Anspruch 1 oder 2, wobei eine dem ersten Dienstmerkmal entsprechende Granularität eine beliebige der Folgenden ist: eine Protokolldateneinheit(PDU)-Sitzung, ein Endgerät, ein Dienstgüte(QoS)-Fluss, ein Datenfunkträger (DRB) oder ein Slice,

4. Verfahren nach einem der Ansprüche 1 bis 3, wobei das Verfahren ferner umfasst:
Empfangen, durch den ersten Netzwerkknoten, von Algorithmusinformationen, die durch eine Kernnetzwerkvorrichtung gesendet werden, wobei die Algorithmusinformationen einen ersten Algorithmus und/oder dem ersten Algorithmus entsprechende Parameterinformationen umfassen; und
das Erhalten, durch einen ersten Netzwerkknoten, eines ersten Dienstmerkmals eines Dienstes umfasst:
Bestimmen, durch den ersten Netzwerkknoten, des ersten Dienstmerkmals basierend auf den Algorithmusinformationen.

5. Verfahren nach Anspruch 4, wobei das Empfangen, durch den ersten Netzwerkknoten, von Algorithmusinformationen, die durch eine Kernnetzwerkvorrichtung gesendet werden, umfasst:
Empfangen, durch den ersten Netzwerkknoten durch Verwenden der Zentraleinheitssteuerebene, der Algorithmusinformationen, die durch die Kernnetzwerkvorrichtung gesendet werden.

6. Verfahren nach einem der Ansprüche 1 bis 5, wobei das Verfahren ferner umfasst:
Senden, durch den ersten Netzwerkknoten an die Kernnetzwerkvorrichtung, eines zweiten Algorithmus und/oder dem zweiten Algorithmus entsprechende Parameterinformationen.

7. Verfahren nach einem der Ansprüche 1 bis 6, wobei das Erhalten, durch einen ersten Netzwerkknoten, eines ersten Dienstmerkmals eines Dienstes, umfasst:
Bestimmen, durch den ersten Netzwerkknoten, des ersten Dienstmerkmals basierend auf Unterstützungsinformationen, die durch die Kernnetzwerkvorrichtung oder einem anderen Netzwerkknoten gesendet werden, wobei die Unterstützungsinformationen eines oder mehrere der Folgenden umfassen:
ob der Dienst ein periodischer Dienst ist, eine dem Dienst entsprechende Periodizität, wenn der Dienst ein periodischer Dienst ist, eine dem Dienst entsprechende Dienstpaketgröße, ein dem Dienst entsprechendes Dienstmodell oder eine Planungszeit des Dienstes und ob die Unterstützungsinformationen mit der Dienstfunktion identisch sind oder sich davon unterscheiden.

8. Kommunikationseinrichtung (1000), die Einheiten umfasst, die konfiguriert sind, um das Verfahren nach Anspruch 1 durchzuführen.

9. Computerlesbares Speichermedium, wobei das computerlesbare Speichermedium ein Computerprogramm oder Anweisungen speichert; und
wenn das Computerprogramm oder die Anweisungen durch einen Computer, der einem zweiten Netzwerkknoten zugeordnet ist, ausgeführt werden, der zweite Netzwerkknoten veranlasst wird, das Verfahren nach Anspruch 1 auszuführen.

10. Computerprogrammprodukt, das Computerprogrammanweisungen umfasst, wobei die Computerprogrammanweisungen, wenn sie durch einen Computer, der einem zweiten Netzwerkknoten zugeordnet ist, ausgeführt werden, den zweiten Netzwerkknoten veranlassen, das Verfahren nach Anspruch 1 auszuführen.

## Revendications

1. Procédé de communication, comprenant :
la réception (S220), par un deuxième nœud de réseau, d'une première caractéristique de service qui est d'un service et qui est envoyée par un premier nœud de réseau et qui est obtenue par le premier nœud de service sur la base de données de service réelles, dans lequel le premier nœud de réseau est un plan utilisateur d'unité centralisée, le deuxième nœud de réseau est un plan de commande d'unité centralisée, et la première caractéristique de service comprend un ou plusieurs des éléments suivants : si le service est un service périodique, une périodicité correspondant au service lorsque le service est un service périodique, une taille de paquet de service correspondant au service, un modèle de service correspondant au service, ou le temps de programmation du service ; dans lequel un modèle de service est l'un parmi : une seule liaison montante, une seule liaison descendante, une seule liaison montante suivie d'une seule liaison descendante, une seule liaison montante suivie d'une pluralité de liaisons descendantes, ou une pluralité de liaisons montantes suivies d'une seule liaison descendante, où les termes "une seule" et "une pluralité" se réfèrent à une quantité de paquets de données ;
**caractérisé en ce que** le procédé comprend en outre :
l'envoi (S230), par le deuxième nœud de réseau, de la première caractéristique de service à un troisième nœud de réseau, dans lequel le troisième nœud de réseau est une unité distribuée ; ou
la détermination (S240), par le deuxième nœud de réseau, d'une seconde caractéristique de service du service sur la base de la première caractéristique de service, dans lequel une granularité correspondant à la première caractéristique de service est différente d'une granularité correspondant à la seconde caractéristique de service, et l'envoi (S250), par le deuxième nœud de réseau, de la seconde caractéristique de service au troisième nœud de réseau, dans lequel le troisième nœud de réseau est l'unité distribuée ,

2. Procédé selon la revendication 1, comprenant en outre :
l'obtention (S210), par le premier nœud de réseau, de la première caractéristique de service ; et
l'envoi (S220), par le premier nœud de réseau, de la première caractéristique de service au deuxième nœud de réseau.

3. Procédé selon la revendication 1 ou la revendication 2, dans lequel une granularité correspondant à la première caractéristique de service est l'un quelconque des éléments suivants : une unité de données de protocole, PDU, une session, un dispositif terminal, un flux de qualité de service, QoS, un support radio de données, DRB, ou une tranche.

4. Procédé selon l'une quelconque des revendications 1 à 3, dans lequel le procédé comprend en outre :
la réception, par le premier nœud de réseau, d'informations d'algorithme envoyées par un dispositif de réseau central, dans lequel les informations d'algorithme comprennent un premier algorithme et/ou des informations de paramètres correspondant au premier algorithme ; et
l'obtention, par un premier nœud de réseau, d'une première caractéristique de service d'un service comprend :
la détermination, par le premier nœud de réseau, de la première caractéristique de service sur la base des informations d'algorithme.

5. Procédé selon la revendication 4, dans lequel la réception, par le premier nœud de réseau, d'informations d'algorithme envoyées par un dispositif de réseau central comprend :
la réception, par le premier nœud de réseau à l'aide du plan de commande d'unité centralisée, des informations d'algorithme envoyées par le dispositif de réseau central.

6. Procédé selon l'une quelconque des revendications 1 à 5, dans lequel le procédé comprend en outre :
l'envoi, par le premier nœud de réseau au dispositif de réseau central, d'un second algorithme et/ou d'informations de paramètres correspondant au second algorithme.

7. Procédé selon l'une quelconque des revendications 1 à 6, dans lequel l'obtention, par un premier nœud de réseau, d'une première caractéristique de service d'un service comprend :
la détermination, par le premier nœud de réseau, de la première caractéristique de service sur la base d'informations d'assistance envoyées par le dispositif de réseau central ou un autre nœud de réseau, dans lequel les informations d'assistance comprennent un ou plusieurs des éléments suivants :
si le service est un service périodique, une périodicité correspondant au service lorsque le service est un service périodique, une taille de paquet de service correspondant au service, un modèle de service correspondant au service, ou le temps de programmation du service, et les informations d'assistance sont identiques ou différentes de la caractéristique de service.

8. Appareil de communication (1000), comprenant des unités configurées pour effectuer le procédé selon la revendication 1.

9. Support de stockage lisible par ordinateur, dans lequel le support de stockage lisible par ordinateur stocke un programme informatique ou des instructions ; et
lorsque le programme informatique ou les instructions sont exécutés par un ordinateur associé à un deuxième nœud de réseau, le deuxième nœud de réseau est amené à effectuer le procédé selon la revendication 1.

10. Produit de programme informatique, comprenant des instructions de programme informatique, dans lequel les instructions de programme informatique, lorsqu'elles sont exécutées par un ordinateur associé à un deuxième nœud de réseau, amènent le deuxième nœud de réseau à effectuer le procédé selon la revendication 1.
